# EUROPEAN PATENT APPLICATION

(11) **EP 1 284 377 A2**
(43) Date of publication of application: **19.02.2003**
(21) Application number: 02018383.6
(22) Date of filing: 14.08.2002
(51) Int. Cl.: F16H 55/22

(54) **Input pinion shaft and method of manufacturing an input pinion shaft**

(30) Priority: 15.08.2001 US 930611
(71) Applicant: American Axle & Manufacturing, Detroit, Michigan 48212-3488 (US)
(72) Inventor: Prucher, Bryan Paul, Clarkston, Michigan 48346 (US)
(74) Representative: Schaumburg, Thoenes & Thurn

(57) **Abstract**

An input pinion shaft (44) for a differential assembly. The input pinion shaft (44) includes a discretely formed stem (150) and a discretely formed gear (152). The stem (150) includes an engagement surface (172). The gear (152) includes a plurality of gear teeth (190) and a mounting aperture (192) that is sized to receive the stem (150) such that the engagement surface (192) and the contact surface (194) are engaged to one another so as to facilitate transmission of rotary power therebetween. A coupling element, such as a weld, a key or a threaded fastener may also be employed to fix the stem (150) and the gear (152) to one another. A method for forming an input pinion shaft (44) is also provided.

## Description

### FIELD OF THE INVENTION

The present invention generally relates method for manufacturing gears and more particularly to an input pinion shaft that is adapted for use in vehicle differentials and a method for manufacturing the input pinion shaft.

### BACKGROUND OF THE INVENTION

As is well known in the art, the fabrication of a typical Input pinion shaft for an automotive differential assembly is complex and costly and as such, greatly adds to the cost of the differential assembly. A typical process for forming a pinion shaft includes forging, annealing, straightening, rough machining, carburizing, hardening and finish machining operations. Additionally, the pinion shaft is generally processed through a lapping operation wherein the teeth of the pinion shaft are lapped with the teeth of the ring gear to match the pinion shaft and ring gear to one another. The lapping operation matches the pinion shaft and the ring gear to one another, necessitating that they be Installed as a set to a given differential assembly. Despite the almost universal use of such forming processes, several drawbacks have been noted.

One such drawback relates to the initial forming of the pinion shaft through forging. As those skilled in the art will appreciate, the input pinion shaft is typically blanked or rough-formed in a forging operation from a solid billet of steel. This forging operation is relatively complex due to the shape of the input pinion shaft and as such, the tooling for the forging operation is generally complex and expensive.

Another such drawback concerns the machining of the pinion shaft. The numerous machining operations that are performed on the pinion shaft typically account for more 70% of the total cost of the pinion shaft. Furthermore, the protracted nature of the machining operations often results in an average cycle time that exceeds one or more days in length.

Yet another drawback concerns the material from which the pinion shaft is formed. Typically, the steel billet from which the input pinion shaft Is formed is a low carbon steel having characteristics that are particularly well suited to both forging and machining. Such steels, however, generally lack the strength that is desired for an input pinion shaft and as such, a time consuming and costly carburization process is typically employed to create a layer of relatively high carbon steel on the surface of the pinion shaft. Carburization usually entails the placement of semi-finished input shafts into a heated, high-carbon environment for an extended period of time to permit carbon to migrate into the input shaft to a predetermined depth. The input pinion shaft is subsequently heat treated so that the high carbon layer provides a level of strength and durability that is commensurate with the intended application.

Accordingly, there remains a need in the art for an improved input pinion shaft manufacturing method that permits increased flexibility in the design of the input pinion shaft that facilitates application specific customization and the adaptation of lower cost processes for Its manufacture.

### SUMMARY OF THE INVENTION

In one preferred form, the present invention provides an input pinion shaft for a differential assembly. The input pinion shaft includes a discretely formed stem and a discretely formed gear. The stem is includes a shaft portion with an engagement surface. The gear includes a plurality of gear teeth and a mounting aperture that is sized to receive the shaft portion such that the engagement surface and the contact surface are engaged to one another so as to facilitate transmission of rotary power therebetween. A coupling element, such as a weld, a key or a threaded fastener may also be employed to fix the stem and the gear to one another. A method for forming an input pinion shaft is also provided.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

Additional advantages and features of the present invention will become apparent from the subsequent description and the appended claims, taken in conjunction with the accompanying drawings, wherein:

Figure 1 is a schematic illustration of a motor vehicle constructed in accordance with the teachings of the present invention;

Figure 2 is a cut-away perspective view of a portion of the motor vehicle of Figure 1, illustrating the rear axle in greater detail;

Figure 3 is a section view of a portion of the rear axle illustrated in Figure 2;

Figure 4A is an exploded perspective view of a portion of the rear axle, illustrating the input pinion shaft in greater detail;

Figure 4B is an exploded perspective view similar to that of Figure 4A but illustrating a different coupling means for coupling the stem and the gear;

Figure 5A is a section view taken along the longitudinal axis of the input pinion shaft illustrated in Figure 4A;

Figure 5B is a section view taken along the longitudinal axis of the input pinion shaft illustrated in Figure 4B; and

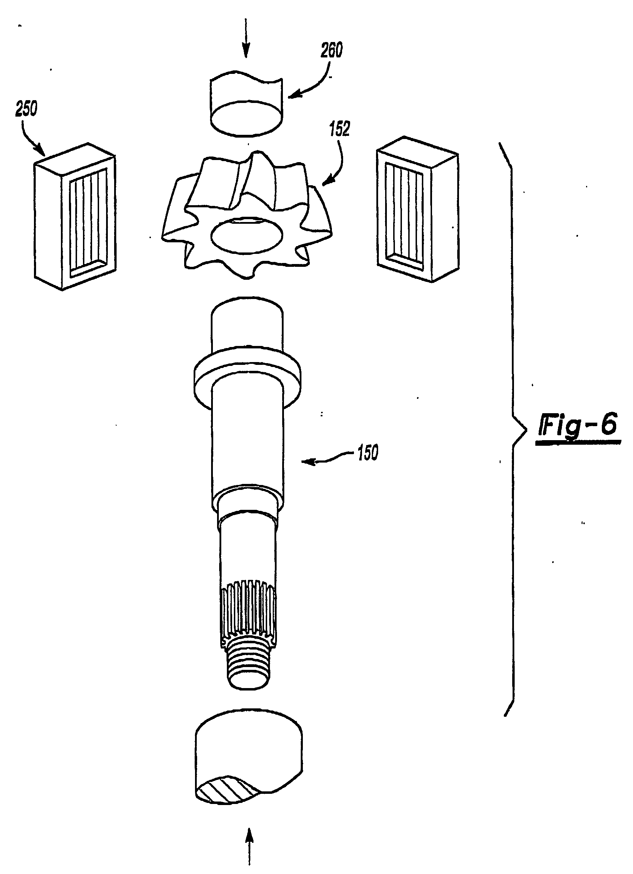

Figure 6 is a schematic illustration of an assembly press and induction heater for heat treating the gear and assembling the stem and the gear.

### DETAILED DESCRIPTION OF THE PREFERRED EMBODIMENTS

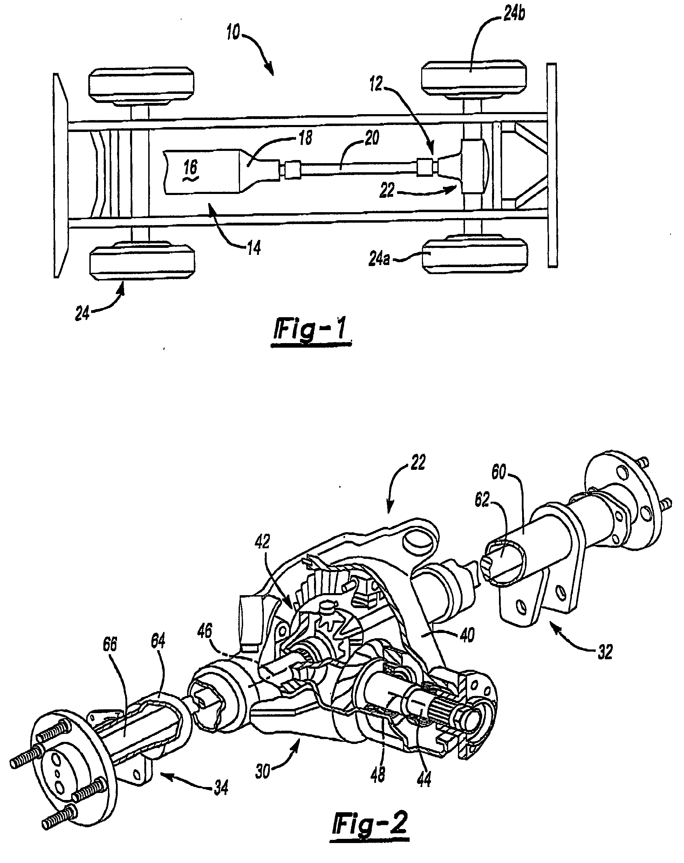

With reference to Figure 1 of the drawings, a vehicle having a differential assembly that Is constructed in accordance with the teachings of the present invention is generally indicated by reference numeral 10. The vehicle 10 Includes a drivellne 12 drivable via a connection to a power train 14. The power train 14 includes an engine 16 and a transmission 18. The driveline 12 includes a drive shaft 20, a rear axle 22 and a plurality of wheels 24. The engine 16 is mounted in an in-line or longitudinal orientation along the axis of the vehicle 10 and Its output is selectively coupled via a conventional clutch to the input of the transmission 18 to transmit rotary power (i.e., drive torque) therebetween. The input of the transmission 18 is commonly aligned with the output of the engine 16 for rotation about a rotary axis. The transmission 18 also includes an output and a gear reduction unit. The gear reduction unit is operable for coupling the transmission input to the transmission output at a predetermined gear speed ratio, The drive shaft 20 is coupled for rotation with the output of the transmission 18. Drive torque is transmitted through the drive shaft 20 to the rear axle 22 where it is selectively apportion in a predetermined manner to the left and right rear wheels 24a and 24b, respectively.

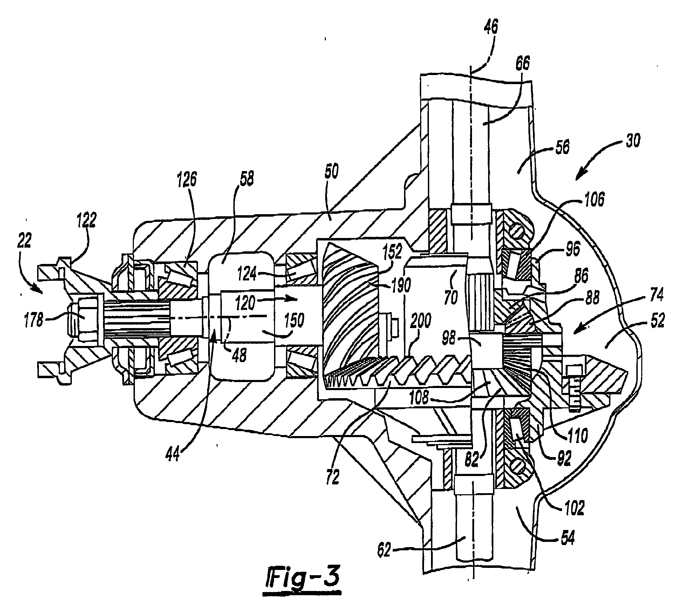

With additional reference to Figures 2 and 3, the rear axle 22 is shown to Include a differential assembly 30, a left axle shaft assembly 32 and a right axle shaft assembly 34. The differential assembly 30 includes a housing 40, a differential unit 42 and an input shaft assembly 44. The housing 40 supports the differential unit 42 for rotation about a first axis 46 and further supports the input shaft assembly 44 for rotation about a second axis 48 that Is perpendicular to the first axis 46.

The housing 40 is initially formed in a suitable casting process and thereafter machined as required. The housing includes a wall member 50 that defines a central cavity 52 having a left axle aperture 54, a right axle aperture 56, and an input shaft aperture 58.

The left axle shaft assembly 32 includes a first axle tube 60 fixed to the left axle aperture 54 and a first axle half-shaft 62 that is supported for rotation in the first axle tube 60 about the first axis 46, Similarly, the right axle shaft assembly 34 includes a second axle tube 64 that is fixed to the right axle aperture 56 and which supports a second axle half-shaft 66 for rotation about the first axis 46.

The differential unit 42 is disposed within the central cavity 52 of the housing 40 and includes a case 70, a ring gear 72 that is fixed for rotation with the case 70, and a gearset 74 that is disposed within the case 70. The gearset 74 includes first and second side gears 82 and 86 and a plurality of differential pinions 88, which are rotatably supported on pinion shafts 90 that are mounted to the case 70. The case 70 includes a pair of trunnions 92 and 96 and a gear cavity 98. A pair of bearing assemblies 102 and 106 are shown to support the trunnions 92 and 96, respectively, for rotation about the first axis 46. The first axle half shaft 62 and the second half shaft 66 extend through the left and right axle apertures 54 and 56, respectively, where they are coupled for rotation about the first axis 46 with the first and second side gears 82 and 86, respectively. The case 70 is operable for supporting the plurality of differential pinions 88 for rotation within the gear cavity 98 about one or more axes that are perpendicular to the first axis 46. The first and second side gears 82 and 86 each include a plurality of teeth 108 which meshingly engage teeth 110 that are formed on the differential pinions 88.

The input shaft assembly 44 extends through the input shaft aperture 58 and includes an input pinion shaft 120, a conventional prop shaft coupling flange 122 and a pair of conventional bearing assemblies 124 and 126. Each of the bearing assemblies 124 and 126 includes an outer race that engages the housing in a press-fit manner. The bearing assemblies 124 and 126 cooperate with the housing 40 to support the input pinion shaft 120 for rotation on the second axis 48 in the input shaft aperture 58.

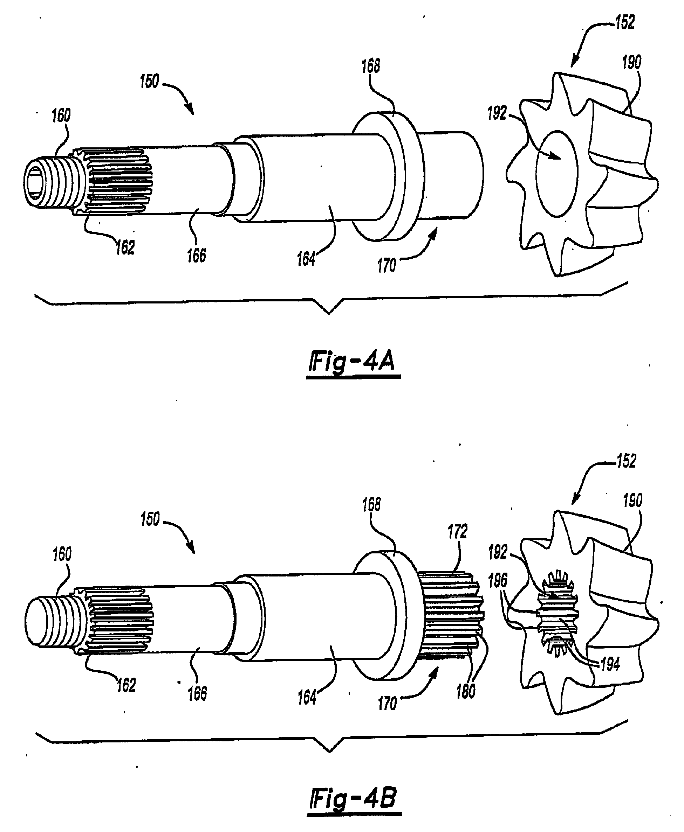

With additional reference to Figures 4A and 5A, the input pinion shaft 120 is shown to include a stem 150 and a gear 152 that are fixedly coupled to one another with an appropriate coupling means 154. The stem 150 may be formed from a first material, such as SAE 1050 steel or another suitable medium strength material, and may have a construction that is solid (Figure 4B) or hollow (Figure 4A), In the example provided, the stem 150 includes a threaded end portion 160, an input spline 162, first and second bearing surfaces 164 and 166, respectively, an annular gear flange 168, and a shaft portion 170 having an engagement surface 172. In the case where the stem 150 is hollow, it is preferably formed from a piece of extruded or seamless-welded tubing (rather than machined from a solid bar) and formed in one or more roll forming operations that are employed to selectively alter the configuration of the wall of the tubing in a predetermined manner.

The input spline 162 is sized to meshingly engage a splined aperture 176 that is formed through the prop shaft coupling flange 122. Engagement of the input spline 162 to the splined aperture 176 facilitates the transmission of drive torque from the drive shaft 20 to the stem 150. A conventional threaded nut 178 is threadably engaged to the threaded end portion 160 to fixedly secure the prop shaft coupling flange 122 to the stem 150.

The first and second bearing surfaces 164 and 166 are preferably initially near-net formed or oversized relative to the inner bearing races of the bearings 124 and 126 such that a predetermined amount of finish stock is present. The finish stock is then typically removed in a subsequent finishing operation, such as a grinding operation. Alternatively, the first and second bearing surfaces 164 and 166 may be net formed in a suitable machining operation, such as in a turning, grinding, or roll forming operation. The annular gear flange 168 abuts the shaft portion 170 and extends radially outwardly therefrom.

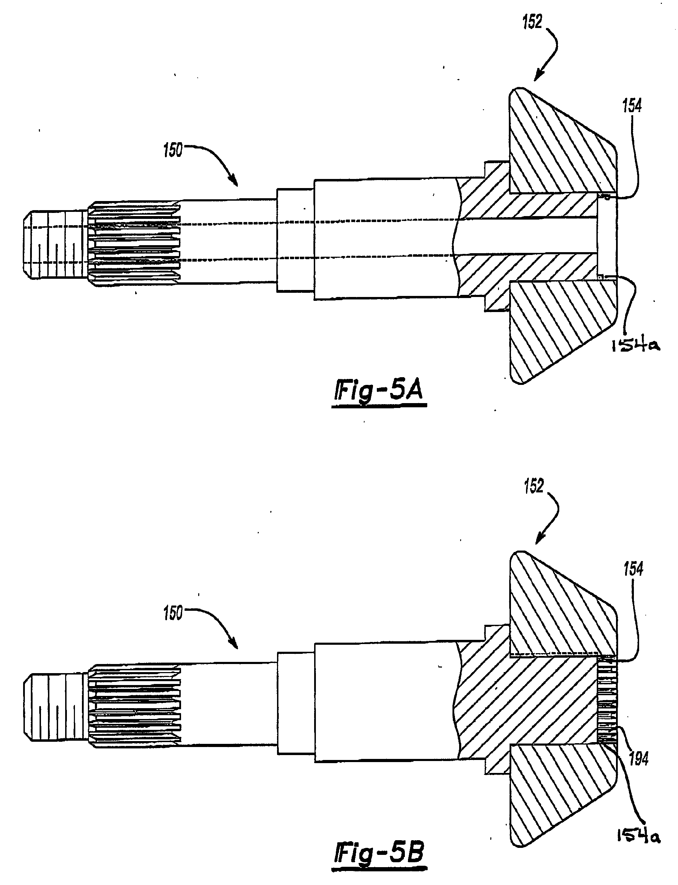

The configuration of the shaft portion 170 is dependent upon the amount of torque that is to be transmitted through the input shaft assembly 44. It is presently preferred that the shaft portion 170 be configured with a cross-section that is uniformly circular in shape, thereby providing the engagement surface 172 with a corresponding cylindrical shape. Configuration in this manner is preferred for ease of manufacture and assembly. Alternatively, the shaft portion 170 may be configured with a non-circular cross-section, such as that shown in Figures 4B and 5B. In this example, a plurality of circumferentially spaced spline teeth are formed into the perimeter of the shaft portion 170 to thereby provide the engagement surface 172 with a series of lands and valleys, Those skilled in the art will readily understand that the shaft portion 170 and the engagement surface 172 may have other configurations. For example, lobes may be formed onto the perimeter of the shaft portion 170, or the shaft portion 170 may be constructed with a non-circular shape, such as triangular, square or hexagonal.

With renewed reference to Figures 4A and 5A, the stem 150 is cut from a billet having a generally cylindrical exterior, cold rolled to form its profile and heat-treated via induction hardening. Those skilled in the art will understand, however, that the profile of the stem 150 may be formed in any appropriate forming or machining process and that any appropriate heat-treating process may additionally be employed, either prior to or after the final machining of the stem 150, to provide the stem 150 with an appropriate level of strength and/or toughness.

The gear 152 may be formed the first material or alternatively, from a second material that is different than the first material, such as SAE 4340 steel or another suitable high strength material. The gear 152 is illustrated to include a plurality of gear teeth 190 and a mounting aperture 192. The gear 152 is initially formed in a forging operation and is thereafter machined to size. Preferably, the gear 152 is near-net formed In a forging operation and thereafter at least partially finished in a chipless machining operation, such as roll forming. Also preferably, the gear 152 is processed through a honing operation after the gear 152 has been processed through a post-forging machining operation (e.g., roll forming or hobbing). Honing is advantageous in that it greatly increases the strength of the gear 152 while simultaneously reduces the magnitude of the residual stresses within the gear 152. Alternatively, the gear 152 may be formed such that a predetermined amount of finish stock is present on the tooth profile of each of the gear teeth 190, which is thereafter removed in a conventional manner. The mounting aperture 192 is sized to receive the shaft portion 170 and includes a contact surface 194 that is configured to engage the engagement surface 172 of the shaft portion 170 in a manner that facilitates the transmission of rotary power therebetween. In the example provided, the shaft portion 170 and the mounting aperture 192 are sized to engage one another such that the coupling means 154 includes an interference fit between the shaft portion 170 and the mounting aperture 192. As those skilled in the art will understand, the magnitude of the interference is a function of the amount of torque that is carried by the input shaft assembly 44. Typical torque loads for an input shaft assembly that is used in a modern automotive vehicle generally warrant an interference fit that is accomplished at least partially via shrink fitting. Where a significant amount of torque is to be carried by the input shaft assembly 44, mating features may be incorporated onto the shaft portion 170 and the mounting aperture 192 so as to facilitate the transmission of relatively larger torque levels. For example, a plurality of spline apertures 198 which are sized to meshingly engage the spline teeth 180 may be formed into the mounting aperture 192 as illustrated in Figures 4B and 5B. Even when mating features are incorporated into the shaft portion 170 and mounting aperture 192, it is still preferred that the shaft portion 170 and mounting aperture 192 be sized such to engage on another with some sort of interference fit (e.g., press fit or better).

According to one method of manufacture, the gear 152 is cut from. a billet and warm formed in a forging operation. The gear 152 is thereafter machined via conventional machining processes to define the tooth profile of the gear teeth 190, the mounting aperture 192 and to form the mating features into the mounting aperture 192 as necessary. Depending on the processes employed to form the gear 152, one or more heat treatment steps may be incorporated into the process prior to and/or after the machining of the gear 152. These heat treatment steps include annealing, carburizing and tempering

Preferably, however, the gear 152 is cut from a billet, warm formed in an appropriate forging operation to near-net form the gear teeth 190 as well as the mounting aperture 192 and thereafter machined. The machining operation further defines the tooth profile of the gear teeth 190 and may be a conventional chip-producing machining operation or a chipless machining operation, such as a roll forming operation. As mentioned above, the machining operation preferably includes a honing operation that produces strong gear teeth 190 having relatively low residual stress. The mounting aperture 192 is bored or otherwise sized. Depending on the geometry of the mating features in the mounting aperture 192, it may be necessary to process the gear through a secondary machining operation, such as a broaching operation, to form features such as the spline apertures 196 that are illustrated in Figure 4B.

Thereafter, the gear 152 is heat-treated in an appropriate hardening process to harden the entire gear 152 or selectively harden portions of the gear 152 (e.g., the gear teeth 190) as desired. Preferably, the gear 152 is heated in an induction heater 250 to permit this operation to be accomplished in a relatively short cycle time. In the area of the root 252 of the gear tooth 190, much of the heat energy that is produced by the induction heater 250 Is being absorbed into the surrounding high-mass area of the gear 152 and as such, this area would not have the same strength qualities as the areas that are relatively further away (e.g., the peak of the tooth 190). In the cases where more strength was required in the root area of the gear teeth 190, an increase in the energy that is output from the induction heater 250 may provide adequate hardening of the root area in some situations. This solution, however, may not be implementable in all cases since the additional heat that is produced may potentially damage the outlying portions of the gear tooth 190. Where additional heat cannot be used, a honing operation to at least partially finish the gear teeth 190 is highly advantageous in that the additional tooth strength that is obtained through honing may be sufficient so as to eliminate the need to harden the root area of the gear teeth 190 to any greater extent.

With the stem 150 and gear 152 initially formed In the manner described above, they are thereafter assembled such that the shaft portion 170 is engaged into the mounting aperture 192. In those applications where the coupling means 154 includes an interference fit, such as a shrink fit, the stem 150 and the gear 152 are preferably assembled in a press 260 immediately after the gear 152 has been heated for heat treatment. Thereafter, the gear 152 and the stem 150, as necessary, may be processed through one or more additional heaters, such as induction heaters, to perform a tempering operation on one or predetermined portions of the input pinion shaft 120.

In the example illustrated, the gear 152 is abutted against the annular gear flange 168 and as such, the annular gear flange 168 is employed as a locating feature to position the gear 152 longitudinally on the stem 150. Also in the particular example illustrated, the coupling means 154 also includes a laser weld 154a that ensures the stem 150 and the gear 152 will remain fixedly coupled to one another. As discussed above, however, the engagement and contact surfaces 172 and 194 are configured to transmit rotary power between the stem 150 and the gear 152. Accordingly, the laser weld 154a need not serve as the primary means for transferring rotary power between the stem 150 and the gear 152 and as such, can be sized relatively small so as to minimize the amount of heat that is delivered to the stem 150 and the gear 152 to generate the laser weld 154a.

It is presently preferred that no machining operations be performed on the input pinion shaft 120 after the stem 150 and the gear 152 have been assembled to one another. However, it may be necessary to employ one or more finish grind operations after the stem 150 and the gear 152 have been assembled to finish the first and second bearing surfaces 164 and 166 and the gear teeth 190. In this regard, the first and second bearing surfaces 164 and 166 are machined to a size that permits them to engage in a press-fit manner the inner bearing races of the bearing assemblies 124 and 126, respectively. Similarly, the gear teeth 190 are machined to a size that permits them to engage the gear teeth 190 that are formed on the ring gear 72.

In some cases, it may also be desirable and/or necessary to finish the gear teeth 190 after the stem 150 and the gear 152 have been assembled to ensure that the runout of the gear teeth 190 will be maintained within desired limits. Accordingly, operations such as grinding, honing or lapping may be employed after the stem 150 and the gear 152 have been assembled.

As noted above, the input pinion shaft 120 Is coupled for rotation with the drive shaft 20 and is operable for transmitting drive torque to the differential unit 42. More specifically, drive torque received by the stem 150 is transmitted to the gear teeth 200 on the ring gear 72 via the gear teeth 190 on the gear 152. Drive torque is thereafter distributed through the differential pinions 88 to the first and second side gears 82 and 86 in a conventional manner that is well known in the art.

While several embodiments of the input pinion shaft 12 of the present invention have been described thus far as including a coupling means 154 having a first portion, in which the engagement surface 172 is engaged to the contact surface 194, and a second portion, which includes, for example, mating geometric features or a laser weld, for preventing relative rotation between the engagement surface 172 and the contact surface 194, those skilled in the art will appreciate that the invention, in its broader aspects, may be constructed somewhat differently. For example, the second portion of the coupling means 154 may include, for example, a conventional key element, such as a Woodruff, parallel, taper, or Gib Head keys, or a threaded fastener. With regard to the keyed embodiment, as those skilled in the art will readily understand, the key Is inserted into a key slot formed into the shaft portion 170 such that the key slot is generally parallel a longitudinal axis of the shaft portion 170 and the key slot extends through the engagement surface 172. A similar key slot is likewise formed into the gear 152 such that the key slot intersects the contact surface 194. The key is placed Into the key slot in the shaft portion 170 and thereafter aligned to the key slot in the gear 152 prior to the assembly of the stem 150 and the gear 152. As those skilled in the art will appreciate, the width of the key slots is matched in an appropriate manner to the width of the key to prevent relative rotation of the stem 150 and the gear 152.

As another example, the second portion of the coupling means 154 may include a conventional threaded fastener, such as a bolt or a nut. As those skilled in the art will appreciate, the shaft portion 170 may be configured to include a threaded aperture that is generally coincident with the longitudinal axis of the stem 150. An appropriate threaded fastener, such as a conventional flange head bolt, may be threadably engaged to the threaded aperture and tightened to exert a clamping force on the gear 152. Alternatively, a portion of the stem 150 may be configured with a flange and a set of external threads that are spaced axially apart from the flange. The gear 152 is abutted against the flange and an internally threaded nut is threadably engaged to the set of external threads to generate a clamping force on the gear 152.

While the invention has been described In the specification and illustrated in the drawings with reference to a preferred embodiment, it will be understood by those skilled in the art that various changes may be made and equivalents may be substituted for elements thereof without departing from the scope of the invention as defined in the claims. In addition, many modifications may be made to adapt a particular situation or material to the teachings of the invention without departing from the essential scope thdreof. Therefore, it is intended that the invention not be limited to the particular embodiment illustrated by the drawings and described in the specification as the best mode presently contemplated for carrying out this invention, but that the invention will include any embodiments falling within the foregoing description and the appended claims.

## Claims

1. An input pinion shaft for a differential assembly, the input pinion shaft comprising:
a stem that is discretely formed from a first material, the stem including a shaft portion having an engagement surface;
a gear that is discretely formed from a second material, the gear including a plurality of gear teeth and a mounting aperture that defines a contact surface, the mounting aperture being sized to receive the shaft portion such that the contact surface abuts the engagement surface; and
coupling means for fixedly coupling the shaft portion and the gear, the coupling means including a first portion, wherein the engagement surface and the contact surface are engaged to one another, and a second portion, which inhibits relative movement between the engagement surface and the contact surface.

2. The input pinion shaft of claim 1, wherein the first and second materials are different.

3. The input pinion shaft of claim 1 or 2, wherein the first portion of the coupling means includes an interference fit between the shaft portion and the mounting aperture.

4. The input pinion shaft of claim 3, wherein the interference fit is a shrink fit.

5. The input pinion shaft of claim 1 to 4, wherein the second portion of the coupling means includes a non-circular shape that is formed into a perimeter of the shaft portion and a mating non-circular shape that is formed into a perimeter of the mounting aperture.

6. The input pinion shaft of claim 1 to 5, wherein one of the engagement and contact surfaces includes a plurality of spline teeth for engaging a plurality of spline apertures formed in the other one of the engagement and contact surfaces.

7. The input pinion shaft of claim 1 to 6, wherein the second portion of the coupling means includes a bond that couples the shaft portion and the gear.

8. The input pinion shaft of claim 7, wherein the bond is weld formed around at least a portion of the shaft portion.

9. The input pinion shaft of claim 8, wherein the weld is a laser weld.

10. The input pinion shaft of claim 1 to 6, wherein the second portion of the coupling means includes an element that engages the gear and the stem.

11. The input pinion shaft of claim 10, wherein the element is selected from a group consisting of welds, keys and threaded fasteners.

12. The input pinion shaft of claim 1 to 11, wherein the stem further includes an annular flange for abutting the gear, the annular flange operatively locating the gear along a longitudinal axis of the stem.

13. The input pinion shaft of claim 1 to 12, wherein the stem is hollow.

14. The input pinion shaft of claim 13, wherein at least a portion of the stem is roll formed.

15. The input pinion shaft of claim 1 to 14, wherein at least a portion of the stem is roll formed.

16. A method for manufacturing an input pinion shaft for a differential assembly, the method comprising the steps of:
providing a stem blank having a generally cylindrical exterior;
roll forming the stem blank to provide a stem that is at least near net formed, the stem including a shaft portion;
forming a gear from a second material, the gear including a plurality of gear teeth and a mounting aperture that is sized to receive the shaft portion;
heat treating the gear; and
assembling the stem and the gear such that the shaft portion is at least partially disposed in the mounting aperture and fixedly engaged to the gear.

17. The method of claim 16, wherein the assembling step is undertaken while the gear is cooling from the heat treating step.

18. The method of claim 16 or 17, wherein the shaft portion has a nominal size that is greater than an associated nominal size of the mounting aperture.

19. The method of claim 16 to 18, wherein the gear forming step includes the step of forging a gear blank.

20. The method of claim 19, wherein the gear blank includes a plurality of gear teeth.

21. The method of claim 20, wherein the gear teeth ar near-net formed.

22. The method of claim 20, further comprising the step of roll forming the gear blank to at leat near net form the gear teeth.

23. The method of claim 22, further comprising the step of honing the gear teeth.

24. The method of claim 16 to 23, wherein the gear is finish machined prior to the assembling step.

25. The method of claim 16 to 24, wherein the stem is finish machined prior to the assembling step.

26. The method of claim 16 to 25, wherein the assembling step includes the step of engaging an element to the stem and the gear to inhibit relative rotation of the stem and the gear.

27. The method of claim 26, wherein the element is selected from a group consisting of welds, keys and threaded fasteners.

28. The method of claim 16 to 27, wherein the first and second materials are different.
